# EUROPÄISCHE PATENTSCHRIFT

(11) **EP 2 196 874 B1**
(45) Veröffentlichungstag und Bekanntmachung des Hinweises auf die Patenterteilung: **22.08.2012**
(21) Anmeldenummer: 08171472.7
(22) Anmeldetag: 12.12.2008
(51) Int. Cl.: G05B 13/02, G05B 19/42

(54) **Bearbeitungseinrichtung und Bearbeitungsverfahren zur Bearbeitung von Objekten mittels einer Maschineneinheit**
Processing device and processing method for processing objects through a machine unit
Dispositif de traitement et procédé de traitement destinés au traitement d'objets à l'aide d'une unité de machine

(43) Veröffentlichungstag der Anmeldung: 16.06.2010
(73) Patentinhaber: Homag Holzbearbeitungssysteme AG, 72296 Schopfloch (DE)
(72) Erfinder: Hils, Winfried, 72250 Freudenstadt (DE)
(74) Vertreter: HOFFMANN EITLE

(56) Entgegenhaltungen:
- EP-A- 0 692 751
- EP-A- 1 604 569
- DE-A1- 19 632 914
- US-A- 5 091 858
- US-A- 5 735 134
- US-B1- 6 192 283
- US-B1- 6 197 115

## Beschreibung

### Technisches Gebiet

Die vorliegende Erfindung betrifft eine Bearbeitungseinrichtung mit einer Vorgabeeinrichtung und einer Maschineneinheit und einem Aktorelement zum Durchführen von Aktionen.

### Stand der Technik

Vorrichtungen und Verfahren, bei denen ein Aktorelement eine Aktion als Konsequenz einer Aufforderung durchführt, sind hinreichend bekannt.

Eine Aktion bezeichnet dabei z. B. das Betreiben eines Pneumatikkolbens, das Erwärmen einer Vorrichtung, insbesondere eines Klebemittelbehältnisses, sowie das Betreiben eines Schrittmotors, insbesondere eines Schrittmotors mit gekoppeltem Drehteller.

All diesen Aktionen ist gemeinsam, dass die Dauer einer Aktion, und daher auch möglicherweise deren Ende, in Abhängigkeit verschiedener Einflüsse variieren kann.

Um sicher zu gehen, dass Aktionen, welche fest in eine Prozesskette oder einen Programmablauf eingebunden sind, zum richtigen Zeitpunkt terminiert sind, wird bei bekannten Bearbeitungseinrichtungen und bekannten Bearbeitungsverfahren der die Aktion durchführenden Bearbeitungseinrichtung die Aufforderung zur Durchführung einer Aktion mit einer zusätzlichen zeitlich überdimensionierten oder unterdimensionierten Vorlaufzeit vor Aktionsbeginn mitgeteilt, so dass eine ungefähr zeitgerechte Durchführung der Aktion sichergestellt werden kann.

Die Bearbeitungseinrichtung ist auf diese Weise in der Lage eine Aktion ungefähr rechtzeitig zu beenden, benötigt jedoch beispielsweise mehr Zeit als eigentlich notwendig. Es ist so nicht möglich, Aktionen zu einem exakten Zeitpunkt zu starten oder zu beenden.

Beispielsweise hängt das Ausfahrverhalten eines Pneumatikkolbens von der Temperatur ab, z.B. wegen der Temperatur/Druckabhängigkeit des enthaltenen Gases und/oder den verwendeten Schmiermitteln, so dass bei niedrigen Temperaturen/Drücken mit einem langsameren Ausfahren gerechnet werden kann, was bei der Auswahl der Vorlaufzeit in Betracht gezogen werden könnte.

Jedoch wird die Auswahl der Vorlaufzeit herkömmlich nur grob geschätzt, oder es wird versucht die Parameter, wie zum Beispiel Drucklufttemperatur oder Druck der Druckluftanlage für den Betrieb des Pneumatikkolbens konstant zu halten. Dies kann vor allem bei zeitkritischen Anwendungen, wie bei Durchlaufmaschinen, zu einem hohen Aufwand für eine Bereitstellung konstanter Parameter und zu unbefriedigenden Ergebnissen führen.

Die US6197115B1 offenbart eine Bearbeitungseinrichtung, die eine Vorgabeeinrichtung zum Vorgeben eines Soll-Aktionszeitwerts umfasst, der einem ersten Satz von Umfeldparametern zugeordnet ist.

Die US 5,735,134 offenbart ein Regelverfahren, bei dem ein Betriebspunkt in Echtzeit energieoptimiert angefahren werden soll. Der Regler ist dabei zur Optimierung rückgeführt.

### Darstellung der Erfindung

Der Erfindung liegt die Aufgabe zugrunde, eine Bearbeitungseinrichtung und ein Bearbeitungsverfahren zu schaffen, dass mindestens einige der bekannten Probleme aus dem Stand der Technik löst und ferner dazu geeignet ist, die Bearbeitungseinrichtung effizient und zeitoptimiert einzusetzen.

Die Lösung der Aufgabe erfolgt zum einen durch die Vorrichtung gemäß dem Patentanspruch 1 und durch das Verfahren gemäß dem Patentanspruch 12. Ferner wird die Aufgabe auch durch eine Durchlaufmaschine gemäß dem Patentanspruch 15 gelöst.

Bevorzugte Ausgestaltungen der erfindungsgemäßen Bearbeitungseinrichtung und des erfindungsgemäßen Bearbeitungsverfahrens ergeben sich aus den Unteransprüchen.

Der Erfindung liegt der Gedanke zugrunde, eine Bearbeitungseinrichtung optimiert und unter Berücksichtigung der vorherrschenden Umfeldparameter einzusetzen. Demzufolge weist die Bearbeitungseinrichtung eine Vorgabeeinrichtung zum Vorgeben eines Soll-Aktionszeitwertes, der einem ersten Satz von Umfeldparametern zugeordnet ist und eine Maschineneinheit mit einem Aktorelement zum Durchführen einer Aktion auf Grundlage des vorgegebenen Soll-Aktionszeitwertes auf. Dabei ist die Bearbeitungseinrichtung ausgebildet zum Erfassen eines Ist-Aktionszeitwertes, der einem zweiten Satz von Umfeldparameter zugeordnet ist, der bei der Maschineneinheit herrscht und zum Aktualisieren der Vorgabeeinrichtung auf Grundlage des zweiten Satzes der Umfeldparameter und des zugeordneten Ist-Aktionszeitwerts.

Dadurch können Ist-Aktionszeitwerte von Aktionen, insbesondere zeitinstabilen Aktionen, d. h. Aktionen bei denen sich die tatsächliche Aktionszeit bei sich verändernden Umfeldparametern stark verändert, einem Satz von Umfeldparametern zugeordnet werden. Durch Aktualisieren der Vorgabeeinrichtung auf Grundlage des zweiten Satzes der Umfeldparameter und des zugeordneten Ist-Aktionszeitwerts ist die Vorgabeeinrichtung besonders vorteilhaft in der Lage, bei fortlaufendem Betrieb der Bearbeitungseinrichtung einen ersten Satz von Umfeldparametern einem Soll-Aktionszeitwert zuzuordnen, der einem Ist-Aktionszeitwert nähe kommt. Durch Zuordnung von Aktionszeitwerten zu Umfeldparametern und Aktualisieren dieser in der Vorgabeeinrichtung, ist es besonders vorteilhaft möglich, eine Bearbeitungseinrichtung so einzusetzen, dass sie durchzuführende Aktionen anforderungsgemäß und vor allem zeitoptimiert durchführt, z.B. dass Abweichungen zwischen Ist-Werten und Soll-Werten minimiert werden.

Gemäß einer Ausgestaltung der Erfindung weist die Bearbeitungseinrichtung, insbesondere die Maschineneinheit, eine erste Erfassungseinheit zum Erfassen des Ist-Aktionszeitwerts der Aktion auf. Diese Ist-Aktionswerte der Aktion können dabei die tatsächliche Dauer einer Aktion kennzeichnen. Alternativ kann der Ist-Aktionszeitwert das Ende der Durchführung einer Aktion oder den Beginn einer Aktion kennzeichnen. Die Erfassungseinheit erfasst diese Ist-Aktionszeitwerte und übermittelt sie an die Bearbeitungseinrichtung, insbesondere an die Vorgabeeinrichtung und/oder die Maschineneinheit.

Gemäß einer weiteren Ausführungsform weist die Maschineneinheit eine zweite Erfassungseinheit zum Erfassen des zweiten Satzes der bei der Maschineneinheit herrschenden Umfeldparameter auf. Diese Umfeldparameter stehen im Zusammenhang mit dem Ist-Aktionszeitwert. Diese Umfeldparameter umfassen beispielsweise den Luftdruck, die vorherrschende Temperatur, die Standzeit der Maschine seit Durchführung der letzen Aktion, sowie die Lichttemperatur. Durch Erfassen der bei der Maschineneinheit herrschenden Umfeldparameter, insbesondere des zweiten Satzes der bei der Maschineneinheit herrschenden Umfeldparameter ist es besonders vorteilhaft möglich, einen Zusammenhang zwischen diesen Umfeldparametern und dem Ist-Aktionszeitwert herzustellen und so die Vorgabeeinrichtung zu aktualisieren.

Gemäß einer weiteren besonders bevorzugten Ausführungsform weist die Vorgabeeinrichtung einen Speicher zum Speichern von Umfeldparametern, die im Zusammenhang stehen mit zugeordneten Aktionszeitwerten und eine Steuereinheit zum Aktualisieren der Umfeldparameter auf. Dabei kann der Speicher ausgebildet sein zum Speichern der Umfeldparameter und der zugeordneten Aktionszeitwerte in Tabellenform. Ferner kann die Steuereinheit dazu ausgebildet sein, mindestens eine Funktion zu definieren, wobei die Funktion mindestens einem Umfeldparameter einen Aktionszeitwert zuordnet. Durch Speichern der Umfeldparameter und der den Umfeldparametern zugeordneten Aktionszeitwerten und durch Definieren einer Funktion, die mindestens einem Umfeldparameter einen Aktionszeitwert zuordnet, ist es besonders vorteilhaft möglich, eine Funktion zu beschreiben, welche bevorzugt lückenlos einem Satz von Umfeldparametern einen Aktionszeitwert zuordnen kann.

Ferner kann die Steuereinheit dazu ausgebildet sein, den erfassten zweiten Satz der Umfeldparameter an den Speicher zum Aktualisieren der Umfeldparameter zu übertragen, wobei die Umfeldparameter im Zusammenhang stehen mit dem erfassten Ist-Aktionszeitwert.

Ferner kann die Steuereinheit auch dazu ausgebildet sein, den Soll-Aktionszeitwert auf Grundlage des erfassten zweiten Satzes der Umfeldparameter, der gespeicherten Umfeldparameter und der zugeordneten Aktionszeitwerte zu bestimmen. Um den Soll-Aktionszeitwert auf Grundlage der genannten Parameter zu bestimmen, kann sich die Steuereinheit unterschiedlicher Strategien bedienen. Es kann z. B. bei einem von den gespeicherten Sätzen von Umfeldparametern abweichenden zweiten Satz von Umfeldparametern ein Zusammenhang zwischen den bisher gespeicherten Sätzen von Umfeldparametern und deren zugeordneten Aktionszeitwerten und dem vorliegenden Satz an Umfeldparametern hergestellt werden. Dazu sind verschiedene Verfahren möglich, es kann z. B. der Mittelwert gebildet werden, es kann ein Verfahren in Analogie zu einer prädiktiven Regelung angewendet werden oder es kann ein Verfahren gemäß einer Fuzzy-Logik angewendet werden, welches besonders dann vorteilhaft ist, wenn wenige bereits gespeicherte Sätze an Umfeldparametern und diesen zugehörigen Aktionszeitwerten gespeichert sind.

Gemäß einer weiteren besonders bevorzugten Ausführungsform ist die Steuereinheit dazu ausgebildet, eine Abweichung zwischen dem Soll-Aktionszeitwert und dem Ist-Aktionszeitwert zu bestimmen und den Speicher zu aktualisieren, insofern eine Abweichung zwischen dem Soll-Aktionszeitwert und dem Ist-Aktionszeitwert über einem Schwellenwert liegt. Auf diese Weise kann besonders vorteilhaft auf eine z. B. aus der Alterung der Maschineneinheit resultierende Veränderung des Ist-Aktionszeitwerts eingegangen werden. Ferner kann bei zu hoher Abweichung ein Alarm ausgelöst werden.

Ferner ist es möglich, dass der Soll-Aktionszeitwert die Zeit angibt, zu der das Durchführen der Aktion beendet ist, oder die Zeit angibt, zu der das Durchführen der Aktion startet, oder die Zeitdauer angibt, die die Aktion zum Durchführen benötigt. Daher ist es besonders vorteilhaft möglich, unterschiedliche Bearbeitungseinrichtungen mit unterschiedlichen Aktorelementen individuell anzusteuern. Kennzeichnet die Soll-Aktionszeit den Beginn einer Aktion, so kann sie in etwa mit einer Totzeit eines Aktorelements gleichgesetzt werden. Kennzeichnet die Soll-Aktionszeit das Ende einer Aktion, so kann sie mit der Summe aus Totzeit und Bearbeitungszeit gleichgesetzt werden.

Gemäß einer weiteren besonders bevorzugten Ausgestaltung ist das Aktorelement dazu ausgebildet, die Aktion auf Grundlage des Soll-Aktionswerts, der auf einer Systemzeit der Bearbeitungseinrichtung und einer extern erfassten Ereigniszeit basiert, durchzuführen. Durch zur Verfügung stellen einer im Wesentlichen gemeinsamen Systemzeit aller Aktorelemente, ist es möglich, den Soll-Aktionszeitwert besonders vorteilhaft so auszugestalten, dass dem Soll-Aktionszeitwert zugrunde liegt, zu welcher Zeit in Abhängigkeit einer Systemzeit das Aktorelement die Aktion abgeschlossen haben soll oder welche Zeitdauer relativ zu der Systemzeit das Aktorelement für die Durchführung der Aktion in Anspruch nehmen kann. In Abhängigkeit davon wird den bestehenden Umfeldparametern mit ihrem zugehörigen Aktionszeitwert besonders Vorteilhaft ein Soll-Aktionszeitwert zugeordnet.

Ferner ist es möglich, dass ein Satz von Umfeldparametern mindestens ein Umfeldparameter umfasst und dass mindestens ein Umfeldparameter des ersten Satzes einem Umfeldparameter des zweiten Satzes entspricht. Ferner kann gelten, dass sämtliche Umfeldparameter des ersten Satzes den Umfeldparametern des zweiten Satzes entsprechen. In diesem Fall ist die Zuordnung des Soll-Aktionszeitwerts besonders einfach.

Die Erfindung weist ferner ein Bearbeitungsverfahren für eine Bearbeitungseinrichtung auf, insbesondere eine Bearbeitungseinrichtung nach einem der vorhergehenden Ansprüche. Dabei wird zunächst ein zweiter Satz von Umfeldparametern, der bei einer Maschineneinheit der Bearbeitungseinrichtung herrscht, erfasst. Anschließend wird von einer Vorgabeeinrichtung ein einem ersten Satz von Umfeldparametern zugeordneter Soll-Aktionswert vorgegeben. Eine Aktion wird anschließend auf Grundlage des angegebenen Soll-Aktionszeitwerts durchgeführt. Anschließend wird ein Ist-Aktionszeitwert der Aktion erfasst und der Ist-Aktionszeitwert wird dem zweiten Satz von Umfeldparametern zugeordnet. Danach wird die Vorgabeeinrichtung auf Grundlage des zweiten Satzes der Umfeldparameter und des zugeordneten Ist-Aktionszeitwerts aktualisiert. Dadurch ist es besonders vorteilhaft möglich, ein Verfahren zur Verfügung zu stellen, welches es ermöglicht eine Aktion mit einem Aktorelement besonders zeitoptimiert durchzuführen und die Terminierung der Aktion auf einen bestimmten Zeitpunkt hin zu optimieren.

Gemäß einer Ausführungsform des Verfahrens weist der Schritt des Aktualisierens der Vorgabeeinrichtung ferner das Speichern des zweiten Satzes von Umfeldparametern, welche im Zusammenhang stehen mit dem Ist-Aktionszeitwert, auf. Durch Speichern des zweiten Satzes von Umfeldparametern ist es besonders vorteilhaft möglich, eine große und stetig wachsende Anzahl an Umfeldparametern und zugehörigen Aktionszeitwerten zu speichern und so die Aktualisierung, und daher die Genauigkeit bei späteren Aktionen, zu verbessern.

Gemäß einem weiteren Verfahrensschritt umfasst das Vorgeben eines einem ersten Satz von Umfeldparametern zugeordneten Soll-Aktionszeitwerts, das Bestimmen des Soll-Aktionszeitwerts auf Grundlage von in der Vorgabeeinrichtung gespeicherten Umfeldparametern und diesen zugeordneten Aktionszeitwerten in Abhängigkeit von dem erfassten zweiten Satz von Umfeldparametern. Dabei kann das Bestimmen des Soll-Aktionszeitwerts durch Interpolieren von mindestens zwei dem zweiten Satz von Umfeldparametern nahe kommenden Sätzen von gespeicherten Umfeldparametern erfolgen. Dadurch ist es besonders vorteilhaft möglich, den Soll-Aktionszeitwert möglichst genau vorherzubestimmen.

Es ist insbesondere vorteilhaft möglich, die Bearbeitungseinrichtung in einer Durchlaufmaschine auszubilden, bei welcher ein zu bearbeitendes Werkstück oder Objekt entlang einer Bearbeitungsstrecke geführt wird, an bestimmten Positionen erfasst wird und bei bestimmten anderen Positionen bearbeitet wird.

### Kurze Beschreibung der Zeichnungen

- Fig. 1: zeigt schematisch eine Bearbeitungseinrichtung gemäß einer Ausführungsform der Erfindung;
- Fig. 2: zeigt ein Flussdiagramm, welches die Schritte eines Bearbeitungsverfahrens einer weiteren möglichen Ausführungsform der Erfindung zeigt;
- Fig. 3: zeigt eine detaillierte Darstellung einer Bearbeitungseinrichtung gemäß einer weiteren Ausführungsform der Erfindung;
- Fig. 4: zeigt ein hydraulisches Stellglied gemäß einer beispielhaften Ausführungsform der vorliegenden Erfindung; und
- Fig. 5: zeigt eine Durchlaufmaschine, die die Maschineneinheit der obigen Bearbeitungseinrichtung verwendet.

### Ausführliche Beschreibung bevorzugter Ausführungsformen

Im Folgenden werden bevorzugte Ausführungsformen der vorliegenden Erfindung unter Bezugnahme auf die Figuren beschrieben. Es wird dabei die Bearbeitungseinrichtung näher beschrieben. Ein Ziel der Bearbeitungseinrichtung ist es, aus vorangegangenen Aktionen, welche von einem Aktorelement durchgeführt wurden, den Soll-Aktionszeitwert für die nächste angeforderte Aktion des Aktorelements möglichst so exakt vorherzubestimmen, dass er dem Ist-Aktionszeitwert entspricht. In anderen Worten ausgedrückt, die Bearbeitungseinrichtung soll aus vorangegangenen Aktionen lernen.

Somit kann durch Anwenden geeigneter Verfahren und/oder Algorithmen der Soll-Aktionszeitwert einer auszuführenden Aktion basierend auf vorherrschenden Umfeldparametern und in Zusammenhang mit Aktionszeitwerten vorangegangener Aktionen, welche im Zusammenhang mit diesen den vorangegangenen Aktionen zugeordneten Umfeldparametern stehen, bestimmt werden.

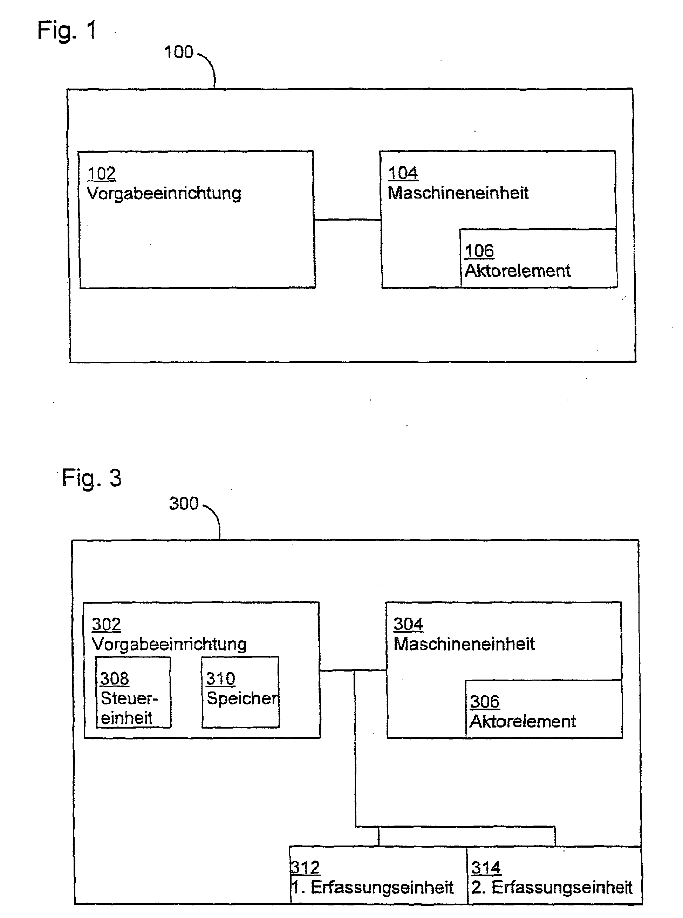

Figur 1 zeigt schematisch eine Bearbeitungseinrichtung 100. Die Bearbeitungseinrichtung 100 umfasst eine Vorgabeeinrichtung 102 sowie eine Maschineneinheit 104 mit einem Aktorelement 106.

Diese Elemente können individuelle miteinander verbundene Elemente darstellen, oder sie können auf eine passende Art und Weise zusammengefasst sein, wobei es möglich ist, die Vorgabeeinrichtung 102 in der Maschineneinheit 104 auszubilden.

Die Vorgabeeinrichtung 102 ist zum Vorgeben eines Soll-Aktionszeitwertes, der einem ersten Satz von Umfeldparametern zugeordnet ist, ausgebildet. Umfeldparameter sind beispielsweise die Temperatur, der Luftdruck, die Standzeit der Maschine seit der letzen durchgeführten Aktion oder das Alter der Maschine. Weitere Umfeldparameter sind möglich, insofern sie zum Bestimmen eines Soll-Aktionszeitwerts geeignet sind.

Die Vorgabeeinrichtung 102 kann durch einen Computer, einen Prozessor, eine Logikschaltung, oder dergleichen realisiert werden, die bevorzugt über einen Bus mit einem Speicher verbunden sind. Die Vorgabeeinrichtung 102 ist mit der Maschineneinheit 104 über eine Direktverdrahtung, z.B. 10-Link, oder ein einfaches Bussystem wie z. B. dem LIN-Bussystem verbunden. Alternativ sind z.B. Bussysteme, wie Profinet, LIN-Bus, Most-Bus, CAN-Bus oder Flexray möglich.

Die Maschineneinheit 104 umfasst mindestens ein Aktorelement 106 und ist dazu ausgebildet, eine Aktion auf Grundlage des vorgegebenen Soll-Aktionszeitwerts durchzuführen. Ein Aktorelement kann beispielsweise ein Aktor in einem Fluidelement, z.B. Pneumatik- oder Hydraulikelement sein, aber auch ein Laser zum Punktschweißen, da dort ein Betrieb oder eine Aktion an einem Werkstück ausgeführt werden kann.

Eine Aktion kann auch beispielsweise der Betrieb des Hydraulikelements entlang einer Bewegungsachse sein, wobei der Soll-Aktionszeitwert beispielsweise die Verfahrdauer bis der Zylinder eine bestimmte Position erreicht hat, kennzeichnet. Alternativ kennzeichnet der Soll-Aktionszeitwert den Zeitpunkt relativ zu einem anderen Zeitpunkt zu dem das hydraulische Element die gewünschte Position erreicht hat. Alternativ kennzeichnet der Soll-Aktionszeitwert den Zeitpunkt zu dem das Betreiben des hydraulischen Elements beginnt. Allgemein ausgedrückt, bedeutet das, dass ein Aktionszeitwert die Zeit angibt, die benötigt wird, um zu einem bestimmten Betriebszustand zu gelangen.

Zum Beispiel kann eine Aktion das Aufheizen eines eine Flüssigkeit oder einen Feststoff beinhaltenden Behältnisses sein, dabei richtet sich der Sall-Aktianszeitwert nach dem zu den Umfeldparametern, insbesondere der vorherrschenden Außentemperatur, zugeordneten Aktionszeitwert.

Es ist eine Vielzahl weiterer Aktionen möglich, insbesondere solche Aktionen deren Soll-Aktionszeitwert sich in Abhängigkeit von schwankenden Umfeldparametern ändert.

Die Bearbeitungseinrichtung 100 ist ferner dazu geeignet, einen Ist-Aktionszeitwert zu erfassen, wobei der Ist-Aktionszeitwert einem zweiten Satz von Umfeldparametern zugeordnet ist. Dieser Ist-Aktionszeitwert stellt bevorzugt die tatsächliche Zeitdauer, welche für die Durchführung einer Aktion durch das Aktorelement 106 der Maschineneinheit 104 benötigt wird, dar. Alternativ stellt der Ist-Aktionszeitwert den tatsächlichen Zeitpunkt des Beginns oder der Beendigung der Durchführung der Aktion durch das Aktorelement 106 der Maschineneinheit 104 dar.

Die Bearbeitungseinrichtung 100 ist ferner dazu ausgebildet, die Vorgabeeinrichtung 102 auf Grundlage des zweiten Satzes der Umfeldparameter und des dazugehörenden Ist-Aktionszeitwerts zu aktualisieren, d. h. die Vorgabeeinrichtung 102 erhält den zweiten Satz Umfeldparameter und bevorzugt auch den zugehörigen Ist-Aktionszeitwert. Ist eine Abweichung zwischen dem Soll-Aktionszeitwert und dem Ist-Aktionszeitwert erkennbar, so kann diese Information in der Vorgabeeinrichtung 102 aktualisiert werden. Bei der nächsten Zuordnung eines Soll-Aktionszeitwerts zu einem Satz Umfeldparameter kann so genauer zugeordnet werden.

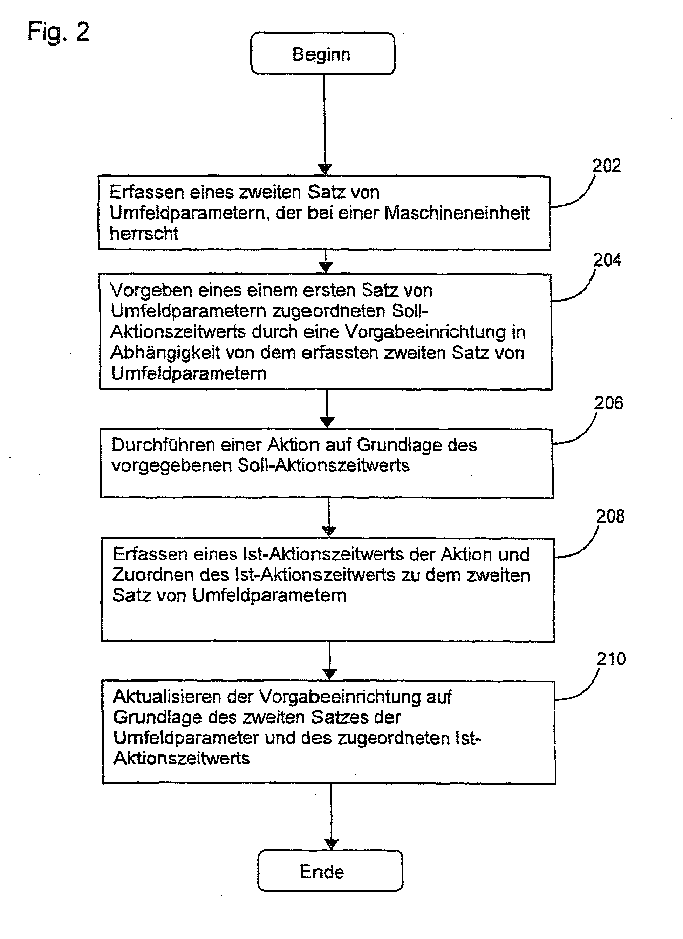

Im Folgenden wird in Figur 2 ein Flussdiagramm beschrieben, das die Schritte eines Bearbeitungsverfahrens einer weiteren Ausführungsform der Erfindung zeigt, z.B. ein Bearbeitungsverfahren für eine erfindungsgemäße Bearbeitungseinrichtung.

Dieses Verfahren kann beispielsweise von der in Figur 1 gezeigten Bearbeitungseinrichtung 100 ausgeführt werden.

In einem ersten Schritt 202 wird ein zweiter Satz von Umfeldparametern, der bei einer Maschineneinheit herrscht, erfasst. Umfeldparameter können dabei, wie oben beschrieben, Temperatur, Druck, Standzeit der Maschine, oder dergleichen sein.

In einem zweiten Schritt 204 wird ein einem ersten Satz von Umfeldparametern zugeordneter Soll-Aktionszeitwert durch eine Vorgabeeinrichtung, in Abhängigkeit von dem erfassten zweiten Satz von Umfeldparametern, vorgegeben.

In einem nächsten Schritt 206 wird eine Aktion auf Grundlage des vorgegebenen Soll-Aktionszeitwerts, insbesondere durch ein Aktorelement einer Maschineneinheit, durchgeführt. Dabei gibt der Soll-Aktionszeitwert die Zeit an, zu der das Durchführen der Aktion beendet ist, oder die Zeit zu der das Durchführen der Aktion startet, oder die Zeitdauer, die die Aktion zum Durchführen benötigt.

Nach dem Durchführen der Aktion wird in einem nächsten Schritt 208 der Ist-Aktionszeitwert der Aktion erfasst. Ferner wird der Ist-Aktionszeitwert zu dem zweiten Satz von Umfeldparametern zugeordnet.

In einem nächsten Schritt 210 wird die Vorgabeeinrichtung auf Grundlage des zweiten Satzes von Umfeldparametern und des zugeordneten Ist-Aktionszeitwerts aktualisiert. Durch fortlaufendes Aktualisieren der Vorgabeeinrichtung, ist es möglich, den Soll-Aktionswert basierend auf einem bereits annähernd bekannten ersten Satz von Umfeldparametern so auszuwählen, dass er in etwa dem Ist-Aktionszeitwert entspricht. So ist es möglich, den Ist-Aktionszeitwert möglichst exakt vorherzubestimmen und damit eine genaue Kenntnis über die für die Durchführung einer Aktion einzuplanende Zeitdauer zu erhalten.

Als nächstes wird eine Bearbeitungseinrichtung 300 gemäß einer weiteren Ausführungsform der Erfindung mit Bezug auf Figur 3 beschrieben. Die Bearbeitungseinrichtung 300 entspricht im Grunde genommen der Bearbeitungseinrichtung 100 umfasst jedoch noch weitere Elemente, so dass weitere vorteilhafte Wirkungen erzielt werden können.

Die in Figur 3 gezeigte Bearbeitungseinrichtung 300 umfasst eine Vorgabeeinrichtung 302, aufweisend eine Steuereinheit 308 und einen Speicher 310, sowie eine Maschineneinheit 304 aufweisend ein Aktorelement. Ferner weist die Bearbeitungseinrichtung 300 eine erste Erfassungseinheit 312 sowie eine zweite Erfassungseinheit 314 auf.

Die erste Erfassungseinheit 312 und die zweite Erfassungseinheit 314 sind als Bestandteil der Bearbeitungseinrichtung 300 ausgebildet. Dabei ist es unerheblich, ob die Erfassungseinheiten in, an oder neben der Bearbeitungseinrichtung 300 ausgebildet sind.

Die erste Erfassungseinheit 312 ist zum Erfassen des Ist-Aktionszeitwerts einer von dem Aktorelement 306 der Maschineneinheit 304 durchgeführten Aktion ausgebildet. Dabei gibt der Ist-Aktionswert, wie oben beschrieben, die Zeit an, zu der das Durchführen einer Aktion beendet ist, oder die Zeitdauer, die die Aktion zum Durchführen benötigt, etc.

Die zweite Erfassungseinheit 314 ist ausgebildet zum Erfassen des zweiten Satzes der bei der Maschineneinheit 304 herrschenden Umfeldparameter, die im Zusammenhang stehen mit dem Ist-Aktionswert. Somit handelt es sich bei den beiden Erfassungseinheiten 312, 314 um Sensoren, die geeignet sind Zeiten bzw. Umfeldparameter zu erfassen, wie z.B. ein Temperatursensor, etc.

Die beiden Erfassungseinheiten 312, 314 übertragen die gemessenen Daten, also den Ist-Aktionszeitwert und die dazugehörigen Umfeldparameter, an den Speicher 310. Der Speicher 310 ist zum Speichern von Umfeldparametern, die im Zusammenhang stehen mit zugeordneten Aktionszeitwerten, ausgebildet.

Die Übertragung der Daten der beiden Erfassungseinheiten 312, 314 kann in Analogie zu dem in Figur 1 beschriebenen Übertragungsverfahren mittels Direktverdrahtung, einem Bussystem oder dergleichen erfolgen.

Die Vorgabeeinrichtung 302 umfasst neben dem Speicher 310 ferner eine Steuereinheit 308. Die Steuereinheit 308 ist zum Aktualisieren der Umfeldparameter ausgebildet.

Der Speicher 310 speichert beispielsweise zunächst die Umfeldparameter und die den Umfeldparametern zugeordneten Aktionszeitwerte in Tabellenform.

Mögliche Tabelleneinträge sind im Folgenden dargestellt:

| Umfeldparameter | | | Satz | Aktionszeitwert |
|---|---|---|---|---|
| P11; P12; P13 | | | P1 | A1 |
| P21; P22; P23 | | | P2 | A2 |
| P31; P32; P33 | | | P3 | A3 |

Bei einer Übereinstimmung der Werte eines zweiten herrschenden Satzes von Umfeldparametern und eines im Speicher 310 gespeicherten ersten Satzes P2 von Umfeldparameter der Tabelle kann eine einfache Zuordnung durchgeführt werden, d.h. dass dem zu dem zweiten herrschenden Satz von Umfeldparametern korrespondierenden ersten Satz P2 von Umfeldparametern P21, P22, P23 im Speicher 310 der gespeicherte Soll-Aktionszeitwert A2 ausgewählt wird und die Aktion mit diesem Soll-Aktionszeitwert durchgeführt wird. Nach Abschluss der Aktion werden der Ist-Aktionszeitwert und der zugehörige zweite Satz Umfeldparameter an einer entsprechenden Stelle in die Tabelle eingefügt, d.h. aktualisiert. Sind der erste Satz P2 von Umfeldparametern nebst zugehörigem Soll-Aktionszeitwert und der zweite Satz von Umfeldparametern nebst zugehörigem Ist-Aktionszeitwert identisch, so ist keine Speicherung in der Tabelle notwendig.

Ist keine direkte Zuordnung des zweiten herrschenden Satzes von Umfeldparametern zu einem gespeicherten Satz von Umfeldparameter möglich, z.B. weil Satz P2 noch nicht im Speicher existiert, so wird der nächst größere und nächst kleinere Satz von Umfeldparametern, in dem hier angeführten Beispiel P11, P12, P13 und P31, P32, P33 genommen und aus den diesen Umfeldparametern zugeordneten Soll-Aktionszeitwerten A1, A3 beispielsweise der Mittelwert gebildet und der Soll-Aktionszeitwert A2 zu einem zweiten herrschenden Satz P2 von Umfeldparametern bestimmt. Nachdem dann der Betrieb mit Soll-Aktionszeitwert A2 ausgeführt wurde und ein Ist-Aktionszeitwert erhalten wurde, kann dieser Ist-Aktionszeitwert als neuer Aktionszeitwert A2 zusammen mit dem Satz P2 in der Tabelle gespeichert werden.

Andere Zuordnungsverfahren sind ebenfalls möglich, vor allem, da es nicht immer möglich ist einen eindeutigen nächstgelegenen Satz Umfeldparameter zu bestimmen, insbesondere wenn die einzelnen Parameter in dem Satz Umfeldparameter, bei der Bestimmung des nächstgelegenen Satz Umfeldparameter, unterschiedlich gewichtet werden. Weitere Zuordnungsverfahren von Soll-Aktionszeitwerten mit zugehörigen Umfeldparametern zu gespeicherten Aktionszeitwerten und diesen zugeordneten Umfeldparametern sind insbesondere Zuordnungsverfahren, welche eine eigene Logikschaltungen, z. B. Fuzzy-Logik, selbst verbessern und so einen Lerneffekt, insbesondere im Sinne einer Autoteachfunktion, aufweisen.

Alternative Speicherformen zur Speicherung in Tabellenform sind die Speicherung in einer Matrix, insbesondere in einer Konditionsmatrix, oder in einem mehrdimensionalen Vektor. Es ist ferner möglich, dass die Matrix fortwährend aktuelle Ist-Aktionszeitwerte und die zugehörigen Umfeldparameter beobachtet und im Sinne eines Selbstlernverfahrens bzw. einer Autoteachfunktion die Matrixstruktur soweit optimiert, dass nur eine begrenzte Anzahl von Datensätzen, hier z.B. spezielle Umfeldparameter, gespeichert werden und dennoch eine schnelle und präzise Zuordnung eines Soll-Aktionszeitwerts zu herrschenden Umfeldparametern stattfinden kann.

Die Steuereinheit 310 kann auch dazu ausgebildet sein, eine Funktion zu definieren, die mindestens einem Umfeldparameter einen Aktionszeitwert zuordnet. Diese Funktion besitzt als Eingangsparameter zumindest einen, bevorzugt mehrere, Umfeldparameter. In Abhängigkeit dieser Parameter, insbesondere der Umfeldparameter, wird eine Funktion von der Steuereinheit 308 definiert, welche abschnittsweise stetig sein kann, jedoch nicht sein muss und in der Lage ist, jedem Satz Umfeldparameter einen Soll-Aktionswert zuzuordnen.

Die Steuereinheit 308 kann auch dazu ausgebildet sein, einen von den Erfassungseinheiten 312, 314 erfassten zweiten Satz von Umfeldparametern und den zugehörigen Ist-Aktionszeitwert an den Speicher 310 zu übertragen. Der Speicher 310 aktualisiert anschließend die Umfeldparameter in dem Speicher 310. Hierbei kann der neue erfasste zweite Satz von Umfeldparametern und damit in Zusammenhang stehende Ist-Aktionszeitwerte in dem Speicher 310 gespeichert werden.

Die Steuereinheit 308 kann ferner dazu ausgebildet sein, anforderungsgemäß, d. h. sobald das Aktorelement 306 der Maschineneinheit 304 eine neue Aktion durchführen soll, auf Grundlage eines zweiten, sofort erfassten oder vor kurzem erfassten Satzes von Umfeldparametern den Soll-Aktionswert auf Grundlage der gespeicherten Umfeldparameter und der zugehörigen Aktionszeitwerte zu bestimmen. Das Bestimmen des Soll-Aktionszeitwerts durch die Steuereinheit 308 kann, wie oben beschrieben, auf unterschiedliche Art und Weise erfolgen, z. B. durch Mitteln zweier Aktionszeitwerte, welche den vorherrschenden Umfeldparametern nahe kommen, durch Anwenden von Fuzzy-Logik-Methoden oder durch neuronale Netze.

Weicht der von der Erfassungseinheit 312 erfasste Ist-Aktionszeitwert über einen relativen oder prozentualen Wert von dem zugeordneten Soll-Aktionszeitwert ab, so kann die Steuereinheit diese Abweichung bestimmen und den Speicher aktualisieren. Somit ist es möglich, die Aktionszeitwerte, welche sich z. B. im Zuge der Alterung der Maschine beispielsweise verlängern, stetig zu aktualisieren und somit stets über eine aktuelle Zuordnung zwischen Umfeldparametern und Soll-Aktionszeitwerten im Speicher zu verfügen. Erkennt die Steuereinheit 308 eine deutliche Schwellwertüberschreitung, so ist die Steuereinheit in der Lage ein Abschalten der Bearbeitungseinrichtung 300 zu erwirken und/oder ein Warnsignal auszugeben, um einer weiteren Beschädigung der Bearbeitungseinrichtung entgegenzuwirken.

Der Soll-Aktionszeitwert gibt dabei die Zeit an, zu der das Durchführen einer Aktion beendet ist, oder zu der das Durchführen einer Aktion startet oder die Zeitdauer, die zum Durchführen einer Aktion benötigt wird. Der Ist-Aktionszeitwert hingegen gibt die Zeit an, zu der das Durchführen der Aktion tatsächlich beendet ist oder zu der das Durchführen der Aktion tatsächlich startet oder die Zeitdauer, die die Aktion tatsächlich zum Durchführen benötigt.

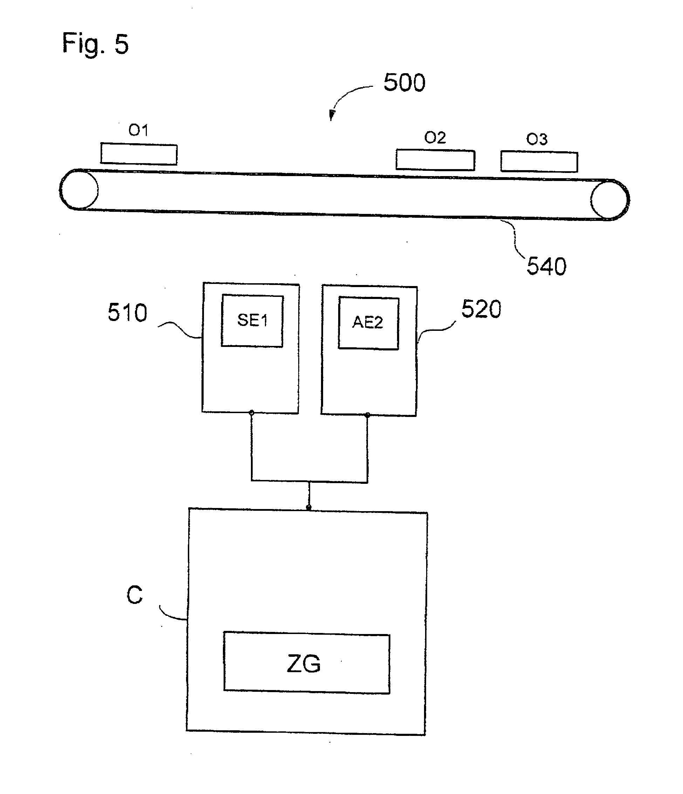

Das Aktorelement 306 kann ferner ausgebildet sein, die Aktion auf Grundlage des Soll-Aktionszeitwerts durchzuführen, wobei der Soll-Aktionszeitwert auf einer Systemzeit der Bearbeitungseinrichtung 300, d.h. beispielsweise einer im gesamten System gleichen Absolutzeit, und einer extern erfassten Ereigniszeit basieren kann, was im Detail mit Bezug auf Fig. 5 unten beschrieben wird. Auf diese Weise ist es besonders vorteilhaft möglich, eine Aktion des Aktorelements besonders zeitgenau zu steuern, d. h. die Aktion wird in Abhängigkeit der extern erfassten Ereigniszeit und des auf Grundlage des erfassten zweiten Satzes der Umfeldparameter bestimmten Soll-Aktionszeitwerts exakt gestartet und terminiert.

Es ist ferner möglich, dass ein Satz von Umfeldparametern mindestens einen Umfeldparameter umfasst, wobei mindestens ein Umfeldparameter des ersten Satzes einem Umfeldparameter des zweiten Satzes entspricht. In einem besonderen Fall ist es sogar möglich, dass sämtliche Umfeldparameter eines ersten Satzes und eines zweiten Satzes einander entsprechen. In diesem Fall ist die Zuordnung des Soll-Aktionszeitwerts direkt und ohne Berechnung möglich. Weicht der anschließend erfasste Ist-Aktionszeitwert stark von dem Soll-Aktionszeitwert ab, so kann von einer Alterung des Aktorelements 306 oder einem falsch erfassten Umfeldparameter oder Ist-Aktionszeitwert durch die Erfassungseinheiten 312, 314 ausgegangen werden und ggf. eine Wartung, insbesondere eine Wartung im Sinne des Condition-Based-Service, der Bearbeitungseinrichtung 300 ausgelöst werden. Die Wartung kann ebenfalls ausgelöst werden, falls der bei zueinander gering verschiedenen Sätzen von Umfeldparametern bestimmte Soll-Aktionszeitwert stark von dem ermittelten Ist-Aktionszeitwert abweicht.

Durch die Zuordnung der Aktionszeitwerte zu einem Satz von Umfeldparametern ist es besonders vorteilhaft möglich, individuell auf die jeweiligen Besonderheiten eines Aktorelements 306 eingehen. So kann z. B. die Todzeit eines Aktorelements 306, also die Zeit, die ein Aktorelement nach Aufforderung zur Durchführung einer Aktion benötigt, um mit der Aktion zu beginnen, jeweils individuell erfasst werden. In Abhängigkeit der erfassten Todzeit eines Aktorelements 306 ist es anschließend besonders vorteilhaft möglich, dieses Aktorelement 306 besonders optimal einzusetzen. Auf diese Weise wird eine umfassende Kenntnis über jedes Aktorelement 306 erlangt.

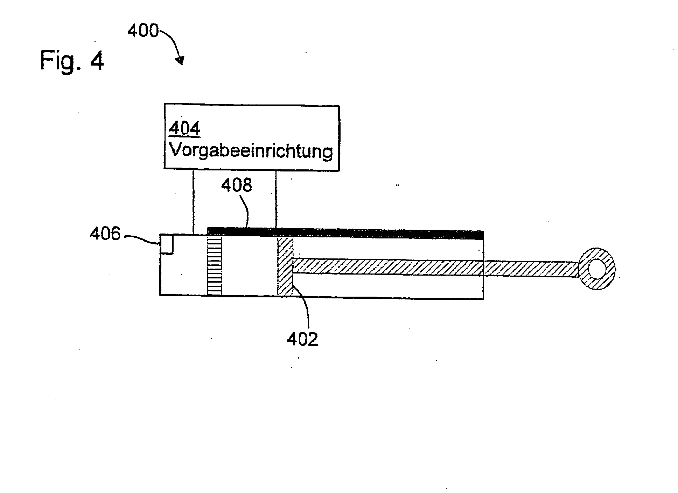

Im Folgenden wird eine hydraulische Einrichtung, insbesondere ein hydraulischer Zylinder 400, mit Bezugnahme auf Figur 4 beschrieben.

Der in Figur 4 gezeigte Zylinder 400 weist eine Vorgabeeinrichtung 404, einen Kolben 402, einen Sensor 408, z.B. eine Linearmesseinheit, sowie eine Erfassungseinheit 406 auf. Aus Gründen der Übersichtlichkeit sind die Anschlüsse der Hydraulikeinrichtung sowie die Verkabelung nicht dargestellt.

Der Kolben 402 ist dazu ausgebildet, dass er beliebige Stellungen innerhalb seines Verfahrbereichs anfahren kann. Die Linearmesseinheit 408 ist dazu ausgebildet, dass sie die Kolbenposition innerhalb des möglichen Kolbenverfahrbereichs jederzeit bestimmen kann.

Die Erfassungseinheit ist dazu ausgebildet, den Ist-Aktionszeitwert des Kolbens 402 beim Erreichen einer gewünschten Position zu erfassen, sowie zum Erfassen des zweiten Satzes der bei dem hydraulischen Zylinder herrschenden Umfeldparameter, die in Zusammenhang stehen mit dem erfassten Ist-Aktionszeitwert.

Längere Standzeiten, eine niedrige Temperatur des Hydrauliköls oder Materialeintrags auf der Lauffläche zwischen Kolben und Zylinder führen dazu, dass der Kolben 402 unterschiedlich lange benötigt, um eine gewünschte von der Linearmesseinheit 408 gemessene Position zu erreichen. Weitere Einflüsse durch weitere Umfeldparameter sind möglich.

Erhält der hydraulische Zylinder 400 nun die Anweisung das Betreiben des Kolbens 402 zu einem bestimmten Zeitpunkt zu beginnen oder das Verfahren des Kolbens zu einem bestimmten Zeitpunkt zu beenden oder den Kolben 402 für eine bestimmte Zeitdauer zu betreiben, so wählt die Steuereinheit der Vorgabeeinrichtung 404 aus einem Satz gespeicherter Umfeldparameter und zugehörigen Aktionszeitwerten einen Soll-Aktionszeitwert aus. Verfahren zum Auswählen des Soll-Aktionszeitwerts wurden bereits oben beschreiben.

Die Aktion des Kolbens 402 wird anschließend auf Basis des von der Vorgabeeinrichtung 404 ermittelten Soll-Aktionszeitwerts durchgeführt.

Auf diese Weise ist es möglich, bereits vor dem Betreiben des Kolbens 402 exakte Kenntnisse über die Art des Vorgangs zu erlangen, d. h. der Vorgabeeinrichtung 404 kann zum einen die Totzeit des Kolbens als auch die Endbearbeitungszeit des Kolbens, also die Zeit zu der der Kolben 402 die Bearbeitung abgeschlossen hat, im Wesentlichen bekannt sein.

Das oben beschriebene hydraulische Stellglied, das z.B. eine Maschineneinheit mit einem Aktorelement darstellt, kann auch in einer Durchlaufmaschine 500 integriert werden. Die Vorgabeeinrichtung kann auch ein Teil der Durchlaufmaschine bilden, kann jedoch auch getrennt bereitgestellt werden. Beispielsweise können die Funktionen der Vorgabeeinrichtung, insbesondere die Steuerfunktion und die Speicherfunktion, in der Steuereinheit der Durchlaufmaschine integriert werden.

Wie in Fig. 5 gezeigt, umfasst die Durchlaufmaschine 500 beispielsweise eine Steuereinheit C mit Zeitgeber ZG ausgebildet zum Ausgeben der oben beschriebenen Systemzeit, und zwei mit der Steuereinheit C verbundene Maschineneinheiten 510 und 520 zum Empfangen der Systemzeit, wobei die erste Maschineneinheit 510 ein Sensorelement SE1 umfasst und ausgebildet ist zum Erfassen eines Ereignisses, z.B. den Durchlauf eines Objekt 01 auf einer Fördereinrichtung 540 der Durchlaufmaschine. Ferner kann die erste Maschineneinheit 510 ausgebildet sein zum Ausgeben einer Ereigniszeit basierend auf der Systemzeit, die mit der Erfassung des Ereignisses in Beziehung steht.

Die zweite Maschineneinheit, wie z.B. die Maschineneinheit 104 oder das obige hydraulische Stellglied, enthält ein Aktorelement AE2 und kann ausgebildet sein zum Durchführen einer Aktion gemäß einer von der Steuereinheit C vorgegebenen Aktionszeit, z.B. der obigen Soll-Aktionszeit, basierend auf der Systemzeit und der Ereigniszeit.

Der Wert der Soll-Aktionszeit kann die Zeit angeben, zu der das Durchführen der Aktion beendet ist, oder die Zeit angeben, zu der das Durchführen der Aktion startet, oder die Zeitdauer angeben, die die Aktion zum Durchführen benötigt. Daher kann dem Aktor gesagt werden wann er wo sein muss.

Somit haben in diesem Beispiel die erste und zweite Maschineneinheit die gleiche Systemzeit, und das Erfassen eines Objekts von der ersten Maschineneinheit kann genau durch eine Ereigniszeit, basierend auf der Systemzeit, definiert werden. Bei der ausgegebenen Ereigniszeit muss es sich nicht unbedingt um den Ereigniszeitpunkt selbst handeln, zu dem ein Ereignis wie das Erfassen eines Objekts detektiert wurde, da es auch einfach möglich ist, Zeit- oder Taktdifferenz auszugeben, die von einem Referenztakt bzw. Referenzuhrzeit gemessen werden nachdem ein Ereignis detektiert oder ausgelöst wurde.

Aus der vorhergehenden Beschreibung erkennt der Fachmann, dass verschiedene Modifizierungen und Variierungen der Bearbeitungseinrichtung des Bearbeitungsverfahrens und der Durchlaufmaschine durchgeführt werden können, ohne den Umfang der Erfindung zu verlassen. Vielmehr ist es möglich, die Bearbeitungseinrichtung in einer Vielzahl von Applikationen einzusetzen, in der eine exakte Kenntnis des Aktionszeitwerts notwendig ist, bzw. die Durchführung der Aktion erleichtert.

Das praktische Beispiel des hydraulischen Zylinders 400, mit welchem die Erfindung beschrieben wurde, soll lediglich zum besseren Verständnis der Erfindung dienen und soll diese nicht einschränken. Der Fachmann erkennt sofort, dass viele unterschiedliche Anwendungsgebiete sich aus der Erfindung ergeben. Deshalb wird der wahre Umfang der Erfindung durch die folgenden Ansprüche gekennzeichnet.

## Patentansprüche

1. Bearbeitungseinrichtung (100; 300) umfassend:
eine Vorgabeeinrichtung (102; 302; 404) zum Vorgeben eines Soll-Aktionszeitwerts, der einem ersten Satz von Umfeldparametern zugeordnet ist; und
eine Maschineneinheit (104; 304; 510; 520) mit einem Aktorelement (106; 306) zum Durchführen einer Aktion auf Grundlage des vorgegebenen Soll-Aktionszeitwerts;
wobei die Bearbeitungseinrichtung (100; 300) ausgebildet ist zum Erfassen eines Ist-Aktionszeitwerts, der einem zweiten Satz von Umfeldparametern zugeordnet ist, der bei der Maschineneinheit (104; 304; 510; 520) herrscht, und zum Aktualisieren der Vorgabeeinrichtung (102; 302; 404) auf Grundlage des zweiten Satzes der Umfeldparameter und des zugeordneten Ist-Aktionszeitwerts.

2. Bearbeitungseinrichtung nach Anspruch 1, wobei die Maschineneinheit (104; 304; 510; 520) ferner umfasst eine erste Erfassungseinheit (312; 406) zum Erfassen des Ist-Aktionszeitwerts der Aktion.

3. Bearbeitungseinrichtung nach Anspruch 1 oder 2, wobei die Maschineneinheit (104; 304; 510; 520) ferner umfasst
eine zweite Erfassungseinheit (314; 406) zum Erfassen des zweiten Satzes der bei der Maschineneinheit (104; 304; 510; 520) herrschenden Umfeldparameter, die in Zusammenhang stehen mit dem Ist-Aktionszeitwert.

4. Bearbeitungseinrichtung nach einem der Ansprüche 1 bis 3, wobei die Vorgabeeinrichtung (102; 302; 404) umfasst
einen Speicher (310) zum Speichern von Umfeldparametern, die in Zusammenhang stehen mit zugeordneten Aktionszeitwerten; und
eine Steuereinheit (308) zum Aktualisieren der Umfeldparameter.

5. Bearbeitungseinrichtung nach Anspruch 4, wobei
der Speicher (310) ausgebildet ist zum Speichern der Umfeldparameter und der zugeordneten Aktionszeitwerte in Tabellenform, oder wobei die Steuereinheit (308) ausgebildet ist zum Definieren mindestens einer Funktion, die mindestens einem Umfeldparameter einen Aktionszeitwert zuordnet.

6. Bearbeitungseinrichtung nach Anspruch 4 oder 5, wobei
die Steuereinheit (308) ausgebildet ist zum Übertragen des erfassten zweiten Satzes der Umfeldparameter, die in Zusammenhang stehen mit dem erfassten Ist-Aktionszeitwert, an den Speicher (310) zum Aktualisieren der Umfeldparameter in dem Speicher (310).

7. Bearbeitungseinrichtung nach einem der Ansprüche 4 bis 6, wobei
die Steuereinheit (308) ausgebildet ist zum Bestimmen des Soll-Aktionszeitwerts auf Grundlage des erfassten zweiten Satzes der Umfeldparameter, der gespeicherten Umfeldparameter und der zugeordneten Aktionszeitwerte.

8. Bearbeitungseinrichtung nach einem der Ansprüche 4 bis 7, wobei
die Steuereinheit (308) ausgebildet ist zum Bestimmen einer Abweichung zwischen dem Soll-Aktionszeitwert und dem Ist-Aktionszeitwert und zum Aktualisieren des Speichers (310), falls die Abweichung über einem Schwellenwert liegt.

9. Bearbeitungseinrichtung nach einem der Ansprüche 1 bis 8, wobei
der Aktionszeitwert, die Zeit angibt, zu der das Durchführen der Aktion beendet ist, oder die Zeit angibt, zu der das Durchführen der Aktion startet, oder die Zeitdauer angibt, die die Aktion zum Durchführen benötigt.

10. Bearbeitungseinrichtung nach einem der Ansprüche 1 bis 9, wobei
das Aktorelement (106; 306) ausgebildet ist zum Durchführen der Aktion auf Grundlage des Soll-Aktionszeitwerts, der auf einer Systemzeit der Bearbeitungseinrichtung (100; 300) und einer extern erfassten Ereigniszeit basiert.

11. Bearbeitungseinrichtung nach einem der Ansprüche 1 bis 10, wobei
ein Satz von Umfeldparametern mindestens einen Umfeldparameter umfasst, und wobei mindestens ein Umfeldparameter des ersten Satzes einem Umfeldparameter des zweiten Satzes entspricht.

12. Bearbeitungsverfahren für eine Bearbeitungseinrichtung, insbesondere eine Bearbeitungseinrichtung nach einem der vorhergehenden Ansprüche, umfassend folgende Schritte:
- Erfassen eines zweiten Satz von Umfeldparametern, der bei einer Maschineneinheit (104; 304; 510; 520) der Bearbeitungseinrichtung (100; 300) herrscht;
- Vorgeben eines einem ersten Satz von Umfeldparametern zugeordneten Soll-Aktionszeitwerts durch eine Vorgabeeinrichtung (102; 302; 404);
- Durchführen einer Aktion auf Grundlage des vorgegebenen Soll-Aktionszeitwerts;
- Erfassen eines Ist-Aktionszeitwerts der Aktion und Zuordnen des Ist-Aktionszeitwerts zu dem zweiten Satz von Umfeldparametern; und
- Aktualisieren der Vorgabeeinrichtung (102; 302; 404) auf Grundlage des zweiten Satzes der Umfeldparameter und des zugeordneten Ist-Aktionszeitwerts.

13. Bearbeitungsverfahren nach Anspruch 12, wobei das Aktualisieren umfasst:
Speichern des zweiten Satzes von Umfeldparametern, die in Zusammenhang stehen mit dem Ist-Aktionszeitwert.

14. Bearbeitungsverfahren nach Anspruch 12 oder 13, wobei das Vorgeben umfasst:
Bestimmen des Soll-Aktionszeitwerts auf Grundlage von in der Vorgabeeinrichtung (102; 302; 404) gespeicherten Umfeldparametern und zugeordneten Aktionszeitwerten in Abhängigkeit von dem erfassten zweiten Satz von Umfeldparametern.

15. Durchlaufmaschine mit einer Bearbeitungseinrichtung nach mindestens einem der vorhergehenden Ansprüche 1 bis 11.

## Claims

1. Processing device (100; 300) comprising:
a presetting device (102; 302; 404) for presetting a nominal action time value which is associated with a first set of environmental parameters; and
a machine unit (104; 304; 510; 520) having an actuator element (106; 306) for performing an action on the basis of the preset nominal action time value;
wherein the processing device (100; 300) is designed to detect an actual action time value which is associated with a second set of environmental parameters which prevails in the machine unit (104; 304; 510; 520), and to update the presetting device (102; 302; 404) on the basis of the second set of environmental parameters and the associated actual action time value.

2. Processing device according to claim 1, wherein the machine unit (104; 304; 510; 520) further comprises
a first detection unit (312; 406) for detecting the actual action time value of the action.

3. Processing device according to claim 1 or 2, wherein the machine unit (104; 304; 510; 520) further comprises
a second detection unit (314; 406) for detecting the second set of environmental parameters which prevail in the machine unit (104; 304; 510; 520) and which are connected with the actual action time value.

4. Processing device according to any of claims 1 to 3, wherein the presetting device (102; 302; 404) comprises
a storage means (310) for storing environmental parameters which are connected with associated action time values; and
a control unit (308) for updating the environmental parameters.

5. Processing device according to claim 4, wherein
the storage means (310) is designed to store the environmental parameters and the associated action time values in table form, or wherein the control unit (308) is designed to define at least one function which assigns an action time value to at least one environmental parameter.

6. Processing device according to claim 4 or 5, wherein
the control unit (308) is designed to transmit the detected second set of environmental parameters which are connected with the detected actual action time value, to the storage means (310) for updating the environmental parameters in the storage means (310).

7. Processing device according to any of claims 4 to 6, wherein
the control unit (308) is designed to determine the nominal action time value on the basis of the detected second set of environmental parameters, the stored environmental parameters and the associated action time values.

8. Processing device according to any of claims 4 to 7, wherein
the control unit (308) is designed to determine a deviation between the nominal action time value and the actual action time value and to update the storage means (310) in the event that the deviation is above a threshold value.

9. Processing device according to any of claims 1 to 8, wherein
the action time value indicates the time at which the performance of the action is over, or indicates the time at which the performance of the action starts, or indicates the length of time which the action needs to be performed.

10. Processing device according to any of claims 1 to 9, wherein
the actuator element (106; 306) is designed to perform the action on the basis of the nominal action time value, which is based on a system time of the processing device (100; 300) and an externally detected event time.

11. Processing device according to any of claims 1 to 10, wherein
a set of environmental parameters comprises at least one environmental parameter, and wherein at least one environmental parameter of the first set corresponds to an environmental parameter of the second set.

12. Processing method for a processing device, in particular a processing device according to any of the preceding claims, comprising the following steps:
- detection of a second set of environmental parameters which prevails in a machine unit (104; 304; 510; 520) of the processing device (100; 300);
- presetting of a nominal action time value associated with a first set of environmental parameters by a presetting device (102; 302; 404);
- performance of an action on the basis of the preset nominal action time value;
- detection of an actual action time value of the action and association of the actual action time value with the second set of environmental parameters; and
- updating of the presetting device (102; 302; 404) on the basis of the second set of environmental parameters and the associated actual action time value.

13. Processing method according to claim 12, wherein updating comprises:
storage of the second set of environmental parameters which are connected with the actual action time value.

14. Processing method according to claim 12 or 13, wherein presetting comprises:
determination of the nominal action time value on the basis of environmental parameters stored in the presetting device (102; 302; 404) and associated action time values as a function of the detected second set of environmental parameters.

15. Continuous machine having a processing device according to one or more of the preceding claims 1 to 11.

## Revendications

1. Dispositif de traitement (100 ; 300) comprenant :
- un dispositif de prescription (102 ; 302 ; 404) pour prescrire une valeur temporelle d'action de consigne qui est associée à un premier jeu de paramètres ambiants ; et
- une unité formant machine (104 ; 304 ; 510 ; 520) avec un élément acteur (106 ; 306) pour mettre en oeuvre une action sur la base de la valeur temporelle d'action de consigne prescrite ;
le dispositif de traitement (100 ; 300) étant conçu pour détecter une valeur temporelle d'action réelle qui est associée à un deuxième jeu de paramètres ambiants qui règne dans l'unité formant machine (104 ; 304 ; 510 ; 520) et pour actualiser le dispositif de prescription (102 ; 302 ; 404) sur la base du deuxième jeu de paramètres ambiants et de la valeur temporelle d'action réelle associée.

2. Dispositif de traitement selon la revendication 1, l'unité formant machine (104 ; 304 ; 510 ; 520) comprenant en plus une première unité de détection (312 ; 406) pour détecter la valeur temporelle d'action réelle de l'action.

3. Dispositif de traitement selon la revendication 1 ou 2, l'unité formant machine (104 ; 304 ; 510 ; 520) comprenant en plus une deuxième unité de détection (314 ; 406) pour détecter le deuxième jeu des paramètres ambiants qui règnent dans l'unité formant machine (104 ; 304 ; 510 ; 520) et qui sont en relation avec la valeur temporelle d'action réelle.

4. Dispositif de traitement selon l'une des revendications 1 à 3, le dispositif de prescription (102 ; 302 ; 404) comprenant
- une mémoire (310) pour mémoriser des paramètres ambiants qui sont en relation avec des valeurs temporelles d'action associées ; et
- une unité de commande (308) pour actualiser les paramètres ambiants.

5. Dispositif de traitement selon la revendication 4, la mémoire (310) étant conçue pour mémoriser les paramètres ambiants et les valeurs temporelles d'action associées ou l'unité de commande (308) étant conçue pour définir au moins une fonction qui associe une valeur temporelle d'action à au moins un paramètre ambiant.

6. Dispositif de traitement selon la revendication 4 ou 5, l'unité de commande (308) étant conçue pour transmettre le deuxième jeu détecté des paramètres ambiants, qui sont en relation avec la valeur temporelle d'action réelle détectée, à la mémoire (310) afin d'actualiser les paramètres ambiants dans la mémoire (310).

7. Dispositif de traitement selon l'une des revendications 4 à 6, l'unité de commande (308) étant conçue pour déterminer la valeur temporelle d'action de consigne sur la base du deuxième jeu détecté des paramètres ambiants, des paramètres ambiants mémorisés et des valeurs temporelles d'action associées.

8. Dispositif de traitement selon l'une des revendications 4 à 7, l'unité de commande (308) étant conçue pour déterminer un écart entre la valeur temporelle d'action de consigne et la valeur temporelle d'action réelle et pour actualiser la mémoire (310) si l'écart est supérieur à une certaine valeur de seuil.

9. Dispositif de traitement selon l'une des revendications 1 à 8, la valeur temporelle d'action indiquant soit l'instant auquel l'exécution de l'action est terminée soit l'instant auquel l'exécution de l'action démarre soit la durée qui est nécessaire à l'exécution de l'action.

10. Dispositif de traitement selon l'une des revendications 1 à 9, l'élément acteur (106 ; 306) étant conçu pour exécuter l'action sur la base de la valeur temporelle d'action de consigne qui est basée sur un temps de système du dispositif de traitement (100 ; 300) et sur un temps d'événement détecté de façon externe.

11. Dispositif de traitement selon l'une des revendications 1 à 10, un jeu de paramètres ambiants comprenant au moins un paramètre ambiant et au moins un paramètre ambiant du premier jeu correspondant à un paramètre ambiant du deuxième jeu.

12. Procédé de traitement pour un dispositif de traitement, notamment pour un dispositif de traitement selon l'une des revendications précédentes, comprenant les étapes suivantes :
- détection d'un deuxième jeu de paramètres ambiants qui règne dans une unité formant machine (104 ; 304 ; 510 ; 520) du dispositif de traitement (100 ; 300) ;
- prescription d'une valeur temporelle d'action de consigne associée à un premier jeu de paramètres ambiants par un dispositif de prescription (102 ; 302 ; 404) ;
- exécution d'une action sur la base de la valeur temporelle d'action de consigne prescrite ;
- détection d'une valeur temporelle d'action réelle de l'action et association de la valeur temporelle d'action réelle au deuxième jeu de paramètres ambiants ; et
- actualisation du dispositif de prescription (102 ; 302 ; 404) sur la base du deuxième jeu des paramètres ambiants et de la valeur temporelle d'action réelle associée.

13. Procédé de traitement selon la revendication 12, l'actualisation comprenant :
- la mémorisation du deuxième jeu de paramètres ambiants qui sont en relation avec la valeur temporelle d'action réelle.

14. Procédé de traitement selon la revendication 12 ou 13, la prescription comprenant :
- la détermination de la valeur temporelle d'action de consigne sur la base de paramètres ambiants mémorisés dans le dispositif de prescription (102 ; 302 ; 404) et de valeurs temporelles d'action associées et en fonction du deuxième jeu détecté de paramètres ambiants.

15. Machine de traitement en continu comportant un dispositif de traitement selon au moins l'une des revendications précédentes 1 à 11.
